# EUROPEAN PATENT APPLICATION

(11) **EP 4 707 327 A1**
(43) Date of publication of application: **11.03.2026**
(21) Application number: 25200853.7
(22) Date of filing: 08.09.2025
(51) Int. Cl.: C08J 5/24, B32B 5/26, C08K 3/04, C08K 7/02, C08K 7/04

(54) **PREPREG, INORGANIC FIBER COMPOSITE MATERIAL INCLUDING SAME, AND METHOD FOR MANUFACTURING INORGANIC FIBER COMPOSITE MATERIAL**

(30) Priority: 09.09.2024 KR 20240122161
(71) Applicant: Hansol Chemical Co., Ltd, Seoul 06169 (KR)
(72) Inventor: PARK, Byung-Ju, 54524 Iksan-si, Jeonbuk-do (KR); AHN, Damiro, 54524 Iksan-si, Jeonbuk-do (KR); YANG, Seung-Woo, 54524 Iksan-si, Jeonbuk-do (KR); YUN, Young-Ho, 54524 Iksan-si, Jeonbuk-do (KR); KWON, Se-Man, 54524 Iksan-si, Jeonbuk-do (KR)
(74) Representative: Ipsilon

(57) **Abstract**

Proposed are a prepreg, an inorganic fiber composite material including the same, and a method for manufacturing the inorganic fiber composite material, in which an inorganic fiber wet-laid nonwoven fabric is produced by mixing inorganic fibers with thermoplastic fibers and a prepreg is formed from the inorganic fiber wet-laid nonwoven fabric, thereby simplifying the process steps and improving productivity.

## Description

### BACKGROUND OF THE INVENTION

### Technical Field

The present disclosure relates to a prepreg, an inorganic fiber composite material including the same, and a method for manufacturing the inorganic fiber composite material, in which by simplifying the process for producing a thermoplastic prepreg, high productivity and economic efficiency can be achieved.

### Description of the Related Art

Fiber-reinforced composite materials are manufactured using various fiber types as reinforcement. Common fibers include glass, carbon, aramid, and silicon carbide fibers. Due to their high strength-to-weight ratio characteristics compared to metallic materials, they are used in a wide range of application fields.

Moreover, with increasing concerns about environmental issues in recent years, research aimed at recovering and reusing carbon fibers from discarded fiber-reinforced composite materials is growing, and the related market size is expanding rapidly.

Methods for manufacturing fiber-reinforced composite materials by applying these fibers for composite materials and recycled fibers include mixing fibers, either in the form of woven fabric, nonwoven fabric, or short fibers, with a resin. However, using recycled fibers in composite fabrication presents inherent challenges. To overcome this, a desired approach is to create a nonwoven fabric first and then use it as a base for the composite material.

Additionally, prepregs, which are used in manufacturing fiber-reinforced composite materials, are generally produced through a method such as a solution impregnation or hot melt process. The produced prepregs are then molded into desired shapes to form the final fiber-reinforced composite material. The production of prepregs, either thermosetting or thermoplastic, involves a complex series of steps.

For example, these steps include unwinding fibers, supplying a film of thermoplastic or thermosetting resin, melting and impregnating the supplied carbon fibers with the film, and finally cooling the molten resin.

Therefore, such cumbersome procedures may lead to an increase in manufacturing time and cost, highlighting the need for process simplification and improved productivity. Also, it is necessary to develop materials with improved performance characteristics (e.g., mechanical strength, lightweightness, and electromagnetic interference (EMI) shielding effectiveness).

### Documents of Related Art

(Patent Document 1) Korean Patent Application Publication No. 10-2018-0077909

### SUMMARY OF THE INVENTION

Accordingly, the present disclosure has been made keeping in mind the above problems occurring in the prior art, and one objective of the present disclosure is to provide a prepreg, an inorganic fiber composite material including the same, and a method for manufacturing the inorganic fiber composite material, in which an inorganic fiber wet-laid nonwoven fabric is produced by mixing inorganic fibers with thermoplastic fibers and a prepreg is formed from the inorganic fiber wet-laid nonwoven fabric, thereby simplifying the process steps and improving productivity.

Another objective of the present disclosure is to provide a prepreg having improved performance characteristics (e.g., mechanical strength, lightweightness, and electromagnetic interference (EMI) shielding effectiveness) and an inorganic fiber composite material including the same.

However, the objectives of the present disclosure are not limited to those mentioned above, and other objectives not mentioned above will be clearly understood by those skilled in the art from the following description.

In order to accomplish the above objective, according to one aspect of the present disclosure, there is provided a method for manufacturing an inorganic fiber composite material, the method including: mixing inorganic fibers with thermoplastic fibers to produce an inorganic fiber wet-laid nonwoven fabric; and drying the inorganic fiber wet-laid nonwoven fabric to produce a prepreg.

According to another aspect of the present disclosure, there is provided a prepreg having a density of equal to or less than 0.3 g/cm³.

According to another aspect of the present disclosure, there is provided an inorganic fiber composite material including the prepreg.

The prepreg, the inorganic fiber composite material including the same, and the method for manufacturing the inorganic fiber composite material according to the present disclosure can simplify the process steps by producing an inorganic fiber wet-laid nonwoven fabric through the mixing of inorganic fibers with thermoplastic fibers and forming a prepreg therefrom. Thus, it is possible to reduce energy consumption and operating costs, increase space utilization efficiency of process equipment, and improve productivity.

Furthermore, the prepreg and the inorganic fiber composite material including the same can exhibit improved performance characteristics (e.g., mechanical strength, lightweightness, and electromagnetic interference (EMI) shielding effectiveness).

### DESCRIPTION OF THE PREFERRED EMBODIMENTS

Hereinafter, the operation and effect of the present disclosure will be described in more detail by way of specific embodiments with reference to the drawings. However, these embodiments are merely presented for illustrative purposes only, and the scope of the present disclosure is not determined thereby.

Prior to describing the embodiments in detail, the terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the concept of the term to describe most appropriately the best method he or she knows for carrying out the present disclosure.

Therefore, since embodiments disclosed in this specification are merely preferred examples of the present disclosure and do not fully describe the technical idea of the present disclosure, it will be appreciated that there can be various equivalents and alterations thereto at a filing date of the present application.

As used herein, the singular forms "a", "an", and "the" are intended to include the plural forms as well, unless the context clearly indicates otherwise. It will be further understood that the terms "comprise", "include", "have", etc. when used in this specification, specify the presence of stated features, integers, steps, operations, elements, components, and/or combinations thereof but do not preclude the presence or addition of one or more other features, integers, steps, operations, elements, components, and/or combinations thereof.

As used herein to represent a specific numerical range, the expression "a to b" and "a-b" means "≥a and ≤b".

A method for manufacturing an inorganic fiber composite material according to an aspect of the present disclosure may include: mixing inorganic fibers with thermoplastic fibers to produce an inorganic fiber wet-laid nonwoven fabric; and drying the inorganic fiber wet-laid nonwoven fabric to produce a prepreg.

In one embodiment, the mixing of the inorganic fibers with the thermoplastic fibers to produce the inorganic fiber wet-laid nonwoven fabric may include: a first step of adding the inorganic fibers, the thermoplastic fibers, and a wetting agent to a solvent and stirring them to prepare a solution containing hydrophilized inorganic fibers; a second step of adding a copolymer solution to the solution containing the hydrophilized inorganic fibers and dispersing the hydrophilized inorganic fibers to prepare an inorganic fiber dispersion; and a third step of forming the inorganic fiber dispersion.

Additionally, the copolymer may include: an acrylic acid-based monomer unit; and an acrylamide-based monomer unit.

As the solvent, water may be used.

The copolymer may be either a random copolymer or a block copolymer depending on a synthesis method.

The first step may be a step of introducing hydrophilic groups onto the surface of the hydrophobic inorganic fibers, the hydrophilic groups being capable of forming hydrogen bonds with water, thereby enabling dispersion of the inorganic fibers in water.

Additionally, the second step may be a step of inducing dispersion of the inorganic fibers through electrostatic repulsion while simultaneously preventing re-agglomeration of the inorganic fibers through steric hindrance. In this step, the copolymer solution in which the copolymer is dissolved in a solvent may be mixed with the inorganic fibers appropriately hydrophilized in the first step, and a predetermined amount of solvent may be further added to ensure that the inorganic fibers are appropriately dispersed.

For example, in the second step, the solution containing the hydrophilized inorganic fibers prepared in the first step (which may include inorganic fibers, thermoplastic fibers, a solvent, a wetting agent, a binder, etc.) may be mixed with the copolymer solution (a copolymer (dispersant) and a solvent

(e.g., water) used to dilute the copolymer) in an amount of 1 to 50 times the weight of the inorganic fibers.

Meanwhile, the inorganic fibers may be selected from the group consisting of carbon fibers, glass fibers, ceramic fibers, metal fibers, basalt fibers, recycled carbon fibers obtained from prepregs, etc. via chemical/physical methods, recycled glass fibers, or a combination thereof.

In one embodiment, binder fibers or binder polymers may be further added in the first step.

The binder fibers or binder polymers are used to increase the bonding strength of the inorganic fiber wet-laid nonwoven fabric after the drying step during the production of the inorganic fiber wet-laid nonwoven fabric, and may be, for example, polyvinyl alcohol (PVA) fibers, low-melting-point polyester (LMPET) fibers, polyvinyl alcohol resins, etc.

In one embodiment, in the first step, shear force may be applied at a speed of 100 to 2,000 rpm for equal to or greater than 1 minute to cause stirring. This is to minimize damage to the fibers contained in the inorganic fiber dispersion, and equipment capable of applying high shear force, such as a pulper, overhead stirrer, or knife beater, may be used.

In the first step, a stirring speed may be, for example, 100 to 1,000 rpm, 200 to 2,000 rpm, 200 to 1,500 rpm, 300 to 1,600 rpm, 500 to 1,500 rpm, or 1,250 rpm.

In the first step, a stirring time may be, for example, equal to or greater than 1 minute, equal to or greater than 5 minutes, equal to or greater than 15 minutes, equal to or greater than 20 minutes, equal to or greater than 30 minutes, or equal to or greater than 60 minutes.

In one embodiment, in the second step, the hydrophilic inorganic fibers may be dispersed by stirring at a speed of equal to or less than 1,000 rpm for equal to or greater than 5 minutes.

In the second step, the stirring speed may be, for example, equal to or less than 1,000 rpm, equal to or less than 800 rpm, equal to or less than 500 rpm, or equal to or less than 300 rpm.

In the second step, the stirring time may be, for example, equal to or greater than 1 minute, equal to or greater than 5 minutes, equal to or greater than 15 minutes, equal to or greater than 20 minutes, equal to or greater than 30 minutes, or equal to or greater than 60 minutes.

At this time, an impeller designed to minimize vortex formation may be applied during stirring to disperse and stabilize the inorganic fibers.

In one embodiment, the wetting agent may be a cationic surfactant, an anionic surfactant, a nonionic surfactant, or a combination thereof.

For example, the wetting agent may be an ethylene oxide (EO)/propylene oxide (PO) copolymer surfactant, a polyethylene oxide (PEO) surfactant, a polyethylene glycol (PEG) surfactant, or a combination thereof.

In one embodiment, the copolymer may be included in an amount of 0.1 to 10 wt%, and the inorganic fibers may be included in an amount of 0.01 to 10 wt%, based on a total of 100 wt% of the inorganic fiber dispersion.

When the amount of the copolymer exceeds the above range, the viscosity of the dispersion may increase, causing difficulties in dehydration and drying during the production of the inorganic fiber wet-laid nonwoven fabric, whereas when it falls below the above range, fiber dispersion may not be uniform.

When producing a web, an appropriate amount of the inorganic fibers may be selected according to the desired basis weight. When the amount of the inorganic fibers exceeds or falls below the above range, damage due to friction may increase or proper wetting may not be achieved.

In one embodiment, the binder fibers may be included in an amount of equal to or less than 10 wt%, based on a total of 100 wt% of the inorganic fiber dispersion.

When the amount of the binder fibers exceeds the above range, it may affect the interfacial formation between the thermoplastic fibers and the inorganic fibers after manufacturing the composite material, leading to a deterioration in the physical properties of the composite material.

Additionally, the wetting agent may be included in an amount of 0.01 to 5 wt%, based on a total of 100 wt% of the inorganic fiber dispersion.

In one embodiment, a mol% ratio of the acrylic acid-based monomer unit to the acrylamide-based monomer unit (mol% of the acrylic acid-based monomer unit:mol% of the acrylamide-based monomer unit) may be 10:90 to 90: 10, based on a total of 100 mol% of the copolymer.

For example, the mol% ratio of the acrylic acid-based monomer unit to the acrylamide-based monomer unit may be 90:10, 80:20, 70:30, 60:40, 50:50, 40:60, 30:70, 20:80, or 10:90, and may preferably be 30:70 to 70:30.

When a homopolymer obtained by polymerizing either acrylic acid or acrylamide alone is used as a dispersant, uniform dispersion of the inorganic fibers may not be achieved.

In one embodiment, a monomer polymerized as the acrylic acid-based monomer unit in the copolymer may be acrylic acid, methacrylic acid, itaconic acid, 2-acrylamido-2-methylpropane sulfonic acid, maleic acid, or a combination thereof.

Additionally, a monomer polymerized as the acrylamide-based monomer unit in the copolymer may be acrylamide, methacrylamide, or a combination thereof.

The copolymer may have a pH of 5 to 10, and a viscosity of 100 to 20,000 cp.

For example, the pH of the copolymer may be 5 to 9. When the pH of the inorganic fiber dispersion exceeds or falls below the above range, the dispersant may deteriorate over time or the dispersion performance of the inorganic fibers may decrease.

The pH of the copolymer may be controlled by adding an alkali metal, an alkaline earth metal, an amine compound, or a combination thereof.

In particular, the amine compound may be an amine compound having a pH of equal to greater than 9.

For example, sodium hydroxide, potassium hydroxide, ammonium hydroxide, lithium hydroxide, dimethylamine, trimethylamine, monoethanolamine, diethanolamine, triethanolamine, arginine, tromethamine, diisopropanolamine, and triisopropanolamine may be used to control the pH of the copolymer, but are not limited thereto.

Additionally, when the viscosity of the copolymer exceeds the above range, it may become disadvantageous for use due to its high viscosity, whereas when it falls below the above range, uniform dispersion of the inorganic fibers may not be achieved.

Meanwhile, the copolymer may have a weight average molecular weight of 100,000 to 5,000,000.

When the molecular weight of the copolymer exceeds the above range, it may become disadvantageous for use due to its high viscosity, whereas when it falls below the above range, uniform dispersion of the inorganic fibers may not be achieved.

Additionally, depending on the molecular weight range, copolymers with lower molecular weights may be suitable for dispersing short fibers, while copolymers with higher molecular weights may be suitable for dispersing long fibers.

The inorganic fiber dispersion may have a pH of 2 to 12, and a viscosity of 10 to 200 cp.

The third step is a step of forming the inorganic fiber dispersion prepared in the second step into the form of an inorganic fiber wet-laid nonwoven fabric through a wet process. For example, the inorganic fiber dispersion may be formed into an inorganic fiber wet-laid nonwoven fabric using equipment such as a wet-laid nonwoven fabric machine or a sheet machine.

For example, the third step may include: filtering the inorganic fiber dispersion prepared in the second step using a 25x25 cm² sheet machine and a 70 to 130 mesh screen to form the inorganic fiber dispersion into a sheet; and drying the formed sheet in a hot-air drying oven at 90°C to 115°C for 50 to 70 minutes.

The filtering step may be performed using, for example, a mesh screen of 80 to 110 mesh, 90 to 100 mesh, or 100 mesh. The drying step may be performed at, for example, a temperature of 95°C to 110°C, 100°C to 110°C, or 105°C. Additionally, the drying step may be performed in the hot-air drying oven for a duration of 55 to 65 minutes, 55 to 60 minutes, or 60 minutes.

In one embodiment, the inorganic fibers may be carbon fibers, glass fibers, basalt fibers, ceramic fibers, metal fibers, or a combination thereof.

In one embodiment, the thermoplastic fibers may be at least one selected from the group consisting of polyamide (PA), polyamide 6 (PA6), polyamide 6,6 (PA66), polyamide 12 (PA12), polypropylene (PP), polyethylene terephthalate (PET), polybutylene terephthalate (PBT), polyphenylene sulfide (PPS), polyether ether ketone (PEEK), polyethylene (PE), thermoplastic polyurethane (TPU), and polylactic acid (PLA), but are not limited thereto.

For example, the thermoplastic fibers may be polyamide 6 (PA6).

The thermoplastic fibers may be crimp-free.

In one embodiment, at least one of the inorganic fibers and the thermoplastic fibers may include recycled fibers.

For example, the recycled fibers in the thermoplastic fibers may be at least one selected from the group consisting of recycled polyamide (rPA), recycled polyamide 6 (rPA6), recycled polyamide 6,6 (rPA66), recycled polyamide 12 (rPA12), recycled polypropylene (rPP), recycled polyethylene terephthalate (rPET), recycled polybutylene terephthalate (rPBT), recycled polyphenylene sulfide (rPPS), recycled polyether ether ketone (rPEEK), recycled polyethylene (rPE), recycled thermoplastic polyurethane (rTPU), and recycled polylactic acid (rPLA), but are not limited thereto.

In one embodiment, the inorganic fibers may have an average length of equal to or greater than 10 mm.

For example, the average length of the inorganic fibers may be, but is not limited to, equal to or greater than 12 mm, equal to or greater than 24 mm, equal to or greater than 36 mm, equal to or greater than 48 mm, equal to or greater than 50 mm, or equal to or greater than 60 mm.

In one embodiment, a weight ratio of the inorganic fibers to the thermoplastic fibers may be 0.05:9.95 to 8:2.

For example, the weight ratio may be 0.1:9.9 to 7:3, 0.2:9.8 to 7:3, 0.5:9.5 to 7:3, 1:9 to 7:3, 1.5:8.5 to 7:3, 2:8 to 7:3, 2:8 to 7:3, 2.5:7.5 to 7:3, 3:7 to 7:3, 3:7 to 6:4, 3:7 to 5:5, 3.5:6.5 to 7:3, or 4:6 to 7:3.

In this case, when the weight ratio of the inorganic fibers falls below 0.05, the significance of the inorganic fibers as reinforcement in the composite material may diminish. Whereas, when the weight ratio of the inorganic fibers exceeds 8, there may be limitations in the ability of the thermoplastic fibers to fully melt and encapsulate the inorganic fibers. This may lead to an increase in voids within the inorganic fiber composite material, and a significant reduction in density and a deterioration in mechanical strength of the inorganic fiber composite material.

In one embodiment, the prepreg may have a basis weight of 10 to 400 g/m².

For example, the basis weight may be 10 to 100 g/m², 100 to 200 g/m², 200 to 400 g/m², or 400 g/m².

In one embodiment, the method for manufacturing the inorganic fiber composite material may further include stacking one or more layers of the prepreg and performing heating and pressurizing.

The number of stacked layers of the prepreg may be, for example, 1 or more, 3 or more, or 5 or more.

The heating step may be performed at a temperature of 150°C to 350°C.

For example, the temperature of the heating step may be 170°C to 330°C, 170°C to 310°C, 190°C to 300°C, 210°C to 290°C, 240°C to 260°C, 250°C to 350°C, or 250°C to 300°C.

The temperature of the heating step may need to be higher than the melting point and lower than the decomposition temperature of the thermoplastic fibers contained in the prepreg stacked in one or more layers.

The pressurizing step may be performed at a pressure of equal to or greater than 0.5 MPa.

For example, the pressure of the pressurizing step may be equal to or greater than 0.5 MPa, equal to or greater than 1 MPa, equal to or greater than 5 MPa, equal to or greater than 10 MPa, or equal to or greater than 20 MPa.

In one embodiment, the method for manufacturing the inorganic fiber composite material may include stacking one or more layers of the prepreg and performing molding, cooling, demolding, or a combination of these steps.

The molding step may include the heating and pressurizing steps.

A prepreg according to another aspect of the present disclosure may have a density of equal to or less than 0.3 g/cm³.

The prepreg refers to a single sheet of dried inorganic fiber wet-laid nonwoven fabric produced through the steps of: mixing inorganic fibers with thermoplastic fibers to produce an inorganic fiber wet-laid nonwoven fabric; and drying the inorganic fiber wet-laid nonwoven fabric to produce a prepreg.

For example, the prepreg may have a density of equal to or less than 0.1 g/cm³, equal to or less than 0.05 g/cm³, or 0.001 to 0.006 g/cm³.

Meanwhile, the prepreg may have a tensile strength of equal to or greater than 0.5 Mpa. For example, the tensile strength may be equal to or greater than 0.5 MPa, equal to or greater than 5 MPa, equal to or greater than 10 MPa, equal to or greater than 50 MPa, equal to or greater than 100 MPa, equal to or greater than 300 MPa, or equal to or greater than 500 MPa.

An inorganic fiber composite material according to another aspect of the present disclosure may include the prepreg.

The inorganic fiber composite material refers to a material manufactured through the steps of stacking one or more layers of the prepreg and performing heating and pressurizing.

The inorganic fiber composite material may include one or more layers of the prepreg.

The inorganic fiber composite material may have a density of equal to or greater than 0.5 g/cm³.

For example, the density may be equal to or greater than 0.75 g/cm³, equal to or greater than 1.0 g/cm³, equal to or greater than 1.25 g/cm³, equal to or greater than 1.5 g/cm³, or equal to or greater than 2.0 g/cm³.

Additionally, for example, when the inorganic fiber composite material includes four layers of the prepreg, the density thereof may be 0.5 to 2.0 g/cm³, 1.2 to 1.55 g/cm³, 1.2 to 1.5 g/cm³, 1.25 to 1.6 g/cm³, 1.25 to 1.55 g/cm³, 1.25 to 1.5 g/cm³, or 1.28 to 1.45 g/cm³.

The inorganic fiber composite material may have a tensile strength of equal to or greater than 100 MPa. For example, the tensile strength may be equal to or greater than 230 MPa, equal to or greater than 235 MPa, equal to or greater than 240 MPa, equal to or greater than 245 MPa, equal to or greater than 250 MPa, equal to or greater than 270 MPa, equal to or greater than 290 MPa, or equal to or greater than 320 MPa.

Additionally, for example, when the inorganic fiber composite material includes four layers of the prepreg, the tensile strength thereof may be 230 to 400 MPa, 235 to 420 MPa, 235 to 400 MPa, 235 to 395 MPa, 240 to 395 MPa, 245 to 395 MPa, or 245 to 420 MPa.

The inorganic fiber composite material may have a flexural strength of equal to or greater than 150 MPa. For example, the flexural strength may be equal to or greater than 350 MPa, equal to or greater than 360 MPa, equal to or greater than 370 MPa, equal to or greater than 380 MPa, equal to or greater than 390 MPa, equal to or greater than 400 MPa, or equal to or greater than 450 MPa.

Additionally, for example, when the inorganic fiber composite material includes four layers of the prepreg, the flexural strength thereof may be 350 to 620 MPa, 350 to 610 MPa, 350 to 600 MPa, 360 to 620 MPa, 370 to 620 MPa, 380 to 630 MPa, 380 to 620 MPa, 385 to 600 MPa, 400 to 600 MPa, or 385 to 585 MPa.

In one embodiment, the inorganic fiber composite material may have an electromagnetic interference (EMI) shielding effectiveness of equal to or greater than 35 dB. For example, the EMI shielding effectiveness may be equal to or greater than 37 dB, equal to or greater than 40 dB, equal to or greater than 50 dB, equal to or greater than 60 dB, or equal to or greater than 70 dB.

The EMI shielding effectiveness of the inorganic fiber composite material may be a measured value when the inorganic fibers are produced using carbon fibers, metal fibers, or a combination thereof.

Additionally, for example, when the inorganic fiber composite material includes four layers of the prepreg, the EMI shielding effectiveness may be 35 to 70 dB, 35 to 68 dB, 37 to 75 dB, 37 to 70 dB, 37 to 68 dB, 40 dB to 75 dBs, 40 to 70 dB, 50 to 70 dB, or 40 to 68 dB.

Hereinafter, the present disclosure will be described in more detail by way of examples, but the present disclosure is not limited thereto.

### Preparation Example 1. Preparation of Carbon Fiber Dispersion

Based on a total amount of 500 g, carbon fibers (from Zoltek), polyamide 6 (PA6) fibers (Nylon 6, from Toray), and a nonionic surfactant-based wetting agent were prepared in amounts listed in Table 1 below. They were added to a remaining solvent (water) and mixed. The resultant was then subjected to pre-wetting (a step of preparing a solution containing hydrophilized carbon fibers) using a pulper at 1,250 rpm for 5 minutes.

Subsequently, 500 g of a solution containing hydrophilized carbon fibers, which had undergone the pre-wetting step, was added to a polymer (dispersant) solution prepared by dissolving 3,950 g of a solvent (water) and 50 g of an acrylic copolymer (dispersant). Using an impeller designed to minimize vortex formation, the mixed solution was stirred at a low speed of equal to or less than 300 rpm for 10 minutes to prepare carbon fiber dispersions of Examples 1 to 3.

The carbon fibers used had an average length of 12 mm.

The average length and amount of the carbon fibers used, the amount of the PA fibers (polyamide 6), and the amount of the wetting agent are shown in Table 1 below.

**Table 1**

| | Carbon fibers | | PA fibers | Wetting agent (g) |
|---|---|---|---|---|
| | Average length (mm) | Amount (g) | Amount (g) | |
| Example 1 | 12 mm | 6 | 14 | 5 |
| Example 2 | | 10 | 10 | 5 |
| Example 3 | | 14 | 14 | 5 |

### Preparation Example 2. Production of Prepreg

Using a 25×25 cm² sheet machine and a 100 mesh screen, the carbon fiber dispersions of Examples 1 to 3 were formed into sheets. The formed sheets were then dried in a hot-air drying oven at 105°C for 1 hour to produce prepregs (carbon fiber wet-laid nonwoven fabrics).

The density and tensile strength of the prepregs, each having a basis weight of 320 g/m² and a size of 25x25 cm², produced according to Preparation Example 2 using the carbon fiber dispersions of Examples 1 to 3 were measured.

The density of the prepregs was calculated after measuring their weight and thickness.

The tensile strength of the prepregs was measured at a speed of 2 m/min using AGS-X 10N-10KN from Shimadzu in accordance with the test standard ASTM D3039/D3039M-17.

The measured density and tensile strength values of the prepregs are shown in Table 2 below.

### Preparation Example 3. Production of Carbon Fiber Composite Material

Each of the prepregs produced according to Preparation Example 2 was stacked in four layers, heated at 250°C for 10 minutes, and then pressurized at 10 MPa to produce a carbon fiber composite material.

The density, tensile strength, flexural strength, and electromagnetic interference (EMI) shielding effectiveness of the carbon fiber composite materials produced according to Preparation Example 3 were measured.

The tensile strength of the carbon fiber composite materials was measured according to the test standard ASTM D3039/D3039M-17.

The flexural strength of the carbon fiber composite materials was measured according to the test standard ASTM D790-17.

The EMI shielding effectiveness of the carbon fiber composite materials was measured according to the test standard ASTM D4935-10.

The measured density, tensile strength, flexural strength, and EMI shielding effectiveness values of the carbon fiber composite materials are shown in Table 2 below.

**Table 2**

| | Density (g/cm³) | | Tensile strength (MPa) | | Flexural strength (MPa) | | EMI shielding effectiveness (dB) | |
|---|---|---|---|---|---|---|---|---|
| Used dispersion | Preparation Exam. 2 (prepreg) | Preparation Exam. 3 (carbon fiber composite material) | Preparation Exam. 2 (prepreg) | Preparation Exam. 3 (carbon Fiber Composite material) | Preparation Exam. 2 (prepreg) | Preparation Exam. 3 (carbon fiber composite material) | Preparation Exam. 2 (prepreg) | Preparation Exam. 3 (carbon fiber composite material) |
| Example 1 | 0.0053 | 1.28 | 1.60 | 245 | - | 385 | - | 42.6 |
| Example 2 | 0.0053 | 1.34 | 2.41 | 294 | - | 442 | - | 52.9 |
| Example 3 | 0.0052 | 1.45 | 3.64 | 395 | - | 583 | - | 67.3 |

In the case of the prepregs produced according to Preparation Example 2 using the carbon fiber dispersions of Examples 1 to 3, it was found that when comparing Examples 1, 2, and 3, the case where the weight ratio of the carbon fibers to the PA fibers was 5:5 (Examples 2 and 3) showed improvements in the tensile strength compared to the case with a 3:7 ratio (Example 1).

In particular, in the case of the prepregs produced according to Preparation Example 2 using the carbon fiber dispersions of Examples 2 and 3, in which the weight ratio of the carbon fibers to the PA fibers was 5:5, it was found that the tensile strength was improved as the carbon fiber amount increased.

In the case of the prepregs produced according to Preparation Example 2 using the carbon fiber dispersions of Examples 1 to 3, there was no significant difference in the density therebetween.

Furthermore, in the case of the carbon fiber composite materials produced according to Preparation Example 3 using the carbon fiber dispersions of Examples 1 to 3, it was found that both the density and tensile strength were significantly improved compared to the prepregs produced according to Preparation Example 2 using the carbon fiber dispersions of Examples 1 to 3.

In particular, in the case of the carbon fiber composite materials produced according to Preparation Example 3 using the carbon fiber dispersions of Examples 1 to 3, it was found that, when comparing Examples 1, 2, and 3, the case where the weight ratio of the carbon fibers to PA fiber was 5:5 (Examples 2 and 3) showed improvements in the density, tensile strength, flexural strength, and EMI shielding effectiveness compared to the case with a 3:7 ratio (Example 1).

Furthermore, in the case of the carbon fiber composite materials produced according to Preparation Example 3 using the carbon fiber dispersions of Examples 2 and 3, in which the weight ratio of the carbon fibers to the PA fibers was 5:5, it was found that as the carbon fiber amount increased, improvements were observed in the density, tensile strength, flexural strength, and EMI shielding effectiveness.

That is, the above results demonstrate that the physical properties (density, tensile strength, flexural strength, and EMI shielding effectiveness) of the prepreg and the carbon fiber composite material according to the present disclosure, including a mixture of carbon fibers and thermoplastic fibers, exhibit similar tendencies.

Additionally, the prepreg and carbon fiber composite material according to the present disclosure, including the mixture of carbon fibers and thermoplastic fibers, exhibit excellent physical properties even when using carbon fibers with a relatively long average length of 12 mm.

Moreover, the prepreg and the carbon fiber composite material according to the present disclosure can simplify the manufacturing process by omitting a solution impregnation or hot-melt process required for the manufacture of conventional prepregs and carbon fiber composite materials. Instead, by performing the process of forming a carbon wet-laid nonwoven fabric using the mixture of carbon fibers and thermoplastic fibers, excellent physical properties of both the prepreg and the carbon fiber composite material can be achieved.

The scope of the present disclosure is defined by the appended claims rather than the above detailed description, and all changes or modifications derived from the meaning and range of the appended claims and equivalents thereof are to be interpreted as being included within the scope of present disclosure.

## Claims

1. A method for manufacturing an inorganic fiber composite material, the method comprising:
mixing inorganic fibers with thermoplastic fibers to produce an inorganic fiber wet-laid nonwoven fabric; and
drying the inorganic fiber wet-laid nonwoven fabric to produce a prepreg.

2. The method of claim 1, wherein the inorganic fibers are carbon fibers, glass fibers, basalt fibers, ceramic fibers, metal fibers, or a combination thereof.

3. The method of claim 1, wherein the thermoplastic fibers are at least one selected from the group consisting of polyamide (PA), polypropylene (PP), polyethylene terephthalate (PET), polybutylene terephthalate (PBT), polyphenylene sulfide (PPS), polyether ether ketone (PEEK), polyethylene (PE), thermoplastic polyurethane (TPU), and polylactic acid (PLA).

4. The method of claim 1, wherein at least one of the inorganic fibers and the thermoplastic fibers includes recycled fibers.

5. The method of claim 1, wherein the inorganic fibers have an average length of equal to or greater than 10 mm.

6. The method of claim 1, wherein a weight ratio of the inorganic fibers to the thermoplastic fibers is 0.05:9.95 to 8:2.

7. The method of claim 1, wherein the prepreg has a basis weight of 10 to 400 g/m².

8. The method of claim 1, further comprising:
stacking one or more layers of the prepreg and performing heating and pressurizing.

9. The method of claim 8, wherein the heating is performed at a temperature of 150°C to 350°C, and
the pressurizing is performed at a pressure of equal to or greater than 0.5 MPa.

10. A prepreg having a density of equal to or less than 0.3 g/cm³.

11. An inorganic fiber composite material including the prepreg of claim 10.

12. The inorganic fiber composite material of claim 11, wherein the inorganic fiber composite material has an electromagnetic interference (EMI) shielding effectiveness of equal to or greater than 35 dB.
